# FASCICULE DE BREVET EUROPEEN

(11) **EP 4 211 036 B1**
(45) Date de publication et mention de la délivrance du brevet: **05.03.2025**
(21) Numéro de dépôt: 21773763.4
(22) Date de dépôt: 08.09.2021
(51) Int. Cl.: B64C 1/36, B64D 45/02, H01Q 1/42, H02G 13/00

(54) **RADÔME D'AÉRONEF INTÉGRANT UN SYSTÈME DE PROTECTION PARAFOUDRE ET AÉRONEF COMPRENANT UN TEL RADÔME**
RADOM EINES LUFTFAHRZEUGS, DAS EIN BLITZSCHUTZSYSTEM UMFASST, UND LUFTFAHRZEUG, DAS EIN SOLCHES RADOM UMFASST
AIRCRAFT RADOME INCORPORATING A LIGHTNING PROTECTION SYSTEM, AND AIRCRAFT COMPRISING SUCH A RADOME

(30) Priorité: 08.09.2020 FR 2009090
(43) Date de publication de la demande: 19.07.2023
(73) Titulaire: Composite Industrie, 91070 Bondoufle (FR)
(72) Inventeur: GARNAULT, Christophe, 77930 PERTHES (FR); MARTINS, Philippe, 91360 VILLEMOISSON/ORGE (FR)
(74) Mandataire: Gevers & Orès
(86) Numéro de dépôt international: PCT/EP2021/074728
(87) Numéro de publication internationale: WO 2022/053527

(56) Documents cités:
- EP-A1- 2 743 185
- FR-A1- 2 924 685
- US-A- 3 416 027
- US-A1- 2006 051 592
- US-A1- 2018 342 332

## Description

### Domaine technique de l'invention

L'invention concerne le domaine technique des radômes pour aéronef. Il s'agit en particulier de radômes intégrant un système de protection parafoudre. L'invention concerne en outre un aéronef équipé d'un tel radôme.

### Arrière-plan technique

Classiquement, les aéronefs comprennent une structure primaire munie de parois externes pour la plupart faites à partir de structures composites. Les structures composites présentent en effet un rapport résistance mécanique sur masse très favorable pour une utilisation dans de tels appareils. Le radôme formant la paroi externe protectrice de l'antenne intègre également de telles structures composites.

Cependant, ces structures composites peuvent être endommagées par la foudre. En effet, un impact de foudre génère localement de très fortes densités de charge électrique, susceptibles de les abimer. Or, ces charges électriques ne peuvent pas être évacuées par ces structures composites qui sont électriquement isolantes. Aussi, on emploie un système parafoudre, comme par exemple un grillage métallique intégré à ces structures composites, pour assurer l'évacuation des charges électriques vers une masse de l'aéronef. Cependant, dans le cas du radôme, il existe une contrainte de conception puisque celui-ci doit perturber le moins possible les signaux émis et reçus par l'antenne. Il n'est donc pas possible d'y prévoir un système parafoudre de type grillage métallique, néfaste pour la qualité des échanges radio.

Pour protéger le radôme des impacts de foudre, l'industrie aéronautique a donc généralement recours à des bandes électriquement conductrices, le plus souvent en aluminium ou en cuivre, intégrées au radôme. Ces bandes sont reliées électriquement à la masse de l'aéronef.

Ainsi, il a été proposé des bandes électriquement conductrices en saillie par rapport à la surface externe du radôme, tel que divulgué par exemple dans le document US3416027A. L'inconvénient de telles bandes électriquement conductrices positionnées sur la surface externe, et donc non affleurantes de la surface externe, réside dans le fait qu'elles créent des discontinuités dans l'écoulement du flux autour de l'aéronef et réduisent donc les performances aérodynamiques de celui-ci.

Plus récemment, il a été proposé de limiter les perturbations aérodynamiques en ayant recours à un système de protection parafoudre dans lequel des bandes électriquement conductrices sont placées sur une face du radôme non exposée au flux d'air, notamment sur la face intérieure du radôme, tel que divulgué par exemple dans le document EP2743185A1.

Le document US 8,004,815 B2 divulgue un radôme d'aéronef comprenant un tel système de protection parafoudre. Le système de protection parafoudre comprend une paroi extérieure 10, une paroi intérieure 11 et une pluralité de bandes 13 électriquement conductrices localisées sur la paroi intérieure 11 et sur une face non exposée de la paroi extérieure 10. La réception du courant de foudroiement est effectuée au moyen de plots 15 métalliques affleurant la face exposée de la paroi extérieure 10. Les plots métalliques 15 comprennent une portion cylindrique filetée traversant les bandes 13 électriquement conductrices, ce qui permet à ces dernières de recevoir à leur tour le courant de foudroiement. De plus, la portion cylindrique filetée des plots métalliques 15 s'étend bien au-delà des bandes 13 électriquement conductrices. En effet, des écrous 17 sont disposés de l'autre côté des bandes 13 électriquement conductrices afin de coopérer avec la portion cylindrique filetée des plots métalliques 15 et permettre la fixation des bandes 13 électriquement conductrices.

Un tel système requiert cependant de devoir percer le radôme en plusieurs points sur une même ligne. Cela augmente les risques en termes de tenue mécanique à long terme et les risques d'infiltration d'eau dans la structure composite voire même à l'intérieur du radôme. De plus, du fait de l'utilisation des plots métalliques, la surface métallique réceptionnant la foudre est très limitée en comparaison à celle d'une bande en saillie à l'extérieur, ce qui augmente le risque de dommages locaux du radôme dus au foudroiement.

Le document EP 2 219 950 B1 divulgue un radôme comprenant une structure composite 3 comportant un système parafoudre dans lequel des bandes électriquement conductrices en cuivre ou en aluminium affleurent une surface externe 9 du radôme. À cet égard, la surface externe 9 présente un profil creux dans lequel s'étendent les bandes 1 électriquement conductrices. Chaque bande 1 électriquement conductrice est fixée à la structure composite 3 par l'intermédiaire de plusieurs moyens de fixation 8, 10. Les moyens de fixation 8, 10 consistent en des vis 10 et des écrous 8. Les vis 10 s'étendent au droit de la bande 1 électriquement conductrice. Chacune d'elles présente une surface 2 affleurant la surface externe 9 et un filetage externe qui coopère avec un trou de perçage de la bande 1 électriquement conductrice qui présente à cet effet des moyens de coopération équivalents.

Dans un tel système, comme la surface externe 9 est percée en plusieurs points au niveau des bandes 1 électriquement conductrices, cela augmente les risques en termes de tenue mécanique à long terme et les risques d'infiltration d'eau dans la structure composite voire même à l'intérieur du radôme. En effet, lors d'un impact de foudre la matière de la surface extérieure est nécessairement pulvérisée compte-tenu des énergies mises en jeu. Des impacts de foudre répétés sont donc susceptibles de dégrader la surface extérieure encore plus rapidement à travers les trous (e.g. dus aux perçages) dans cette surface.

Il existe donc un besoin de fournir un radôme d'aéronef muni d'un système parafoudre aérodynamique, permettant de limiter les risques en termes de tenue mécanique à long terme ainsi que les risques d'infiltration d'eau dans la structure composite et dans le radôme.

### Résumé de l'invention

Pour répondre à ce besoin, l'invention propose un radôme d'aéronef comprenant :
- une structure composite définissant au moins un logement situé à l'intérieur ou à l'extérieur de la structure composite et s'étendant le long du radôme à partir d'une embase dudit radôme, ledit au moins un logement recevant une bande électriquement conductrice et ladite bande conductrice étant soit au contact d'une surface interne d'une paroi extérieure de la structure composite lorsque ledit au moins un logement est à l'intérieur de la structure composite, soit affleurant la paroi extérieure de la structure composite lorsque ledit au moins un logement est à l'extérieur de la structure composite,
- une base conductrice située au niveau de ladite embase de radôme et reliée à une masse de l'aéronef,
ladite structure composite étant dépourvue de perforations ou de passages traversant la paroi extérieure au niveau de la bande électriquement conductrice et une première extrémité de ladite bande électriquement conductrice étant en contact avec la base conductrice.

Selon différentes caractéristiques de l'invention qui pourront être prises ensemble ou séparément :
- lorsque la bande électriquement conductrice affleure la paroi extérieure, une surface interne de la bande électriquement conductrice épouse les contours du logement ;
- la structure composite comprend en outre une paroi intérieure et une âme, par exemple sous forme de nid d'abeille, située entre la paroi extérieure et la paroi intérieure ;
- l'âme est faite d'une unique matière le long du radôme ;
- le radôme comprend en outre au moins un autre logement formé dans la paroi extérieure,
- l'autre logement est situé dans le prolongement du logement et reçoit une deuxième extrémité de la bande électriquement conductrice ainsi qu'un moyen de fixation de ladite deuxième extrémité de la bande électriquement conductrice sur la paroi extérieure ;
- le moyen de fixation affleure des portions de la paroi extérieure autres qu'une portion où est formé le deuxième logement ;
- le moyen de fixation se présente sous la forme d'un patch fixant la deuxième extrémité de la bande électriquement conductrice dans ledit au moins un autre logement ;
- lorsque la bande électriquement conductrice est au contact de la surface interne de la paroi extérieure de la structure composite, le logement comprend une portion longitudinale en forme de U comprenant deux branches longitudinales et une branche transversale, ledit logement comprenant deux pattes d'accroche à la surface interne de la paroi extérieure, lesdites pattes d'accroche s'étendant depuis les branches longitudinales ;
- la structure composite comprend en outre une paroi intérieure et une âme, par exemple sous forme de nid d'abeille, située entre la paroi extérieure et la paroi intérieure, le logement s'étendant dans l'épaisseur de l'âme ;
- l'âme comprend, dans un volume V3 ayant comme base le logement et ayant pour hauteur la distance séparant le logement de la paroi intérieure, une matière différente d'une matière du reste de l'âme ;
- le radôme comprend des bandes d'adhésion situées aux interfaces entre la matière et le reste de l'âme ;
- la paroi extérieure présente une épaisseur comprise entre 0,15mm et 1 mm ;
- la première extrémité de la bande électriquement conductrice contourne la structure composite au niveau de l'embase ;
- ladite première extrémité de la bande électriquement conductrice présente une forme de U ;
- ladite première extrémité de la bande électriquement conductrice comprend une première branche longitudinale s'étendant dans le logement, une deuxième branche longitudinale étant en contact avec la base et une branche transversale reliant les première et deuxième branches longitudinales en contournant la structure composite au niveau de l'embase ;
- la structure composite comprend uniquement la paroi extérieure, le logement et la bande électriquement conductrice, la surface interne de la paroi extérieure étant directement en vis-à-vis de l'intérieur du radôme ;
- la bande électriquement conductrice est rectiligne entre la première extrémité et la deuxième extrémité.

L'invention concerne en outre un aéronef comprenant une antenne apte à émettre et recevoir un signal radiofréquence et un radôme tel que précédemment décrit.

### Brève description des figures

D'autres objets, caractéristiques et avantages de l'invention apparaîtront plus clairement dans la description qui suit, faite en référence aux figures annexées, dans lesquelles :
[Fig. 1] La figure 1 illustre une vue en perspective d'un radôme selon un premier mode de réalisation de l'invention ;
[Fig. 2] La figure 2 illustre une vue en coupe du radôme de la figure 1 ;
[Fig. 3a] La figure 3a illustre une vue éclatée de la vue en coupe de la figure 2 ;
[Fig. 3b] La figure 3b illustre une vue éclatée de la vue en coupe de la figure 2, au niveau d'une deuxième extrémité de la bande électriquement conductrice ;
[Fig. 4] La figure 4 illustre une vue en coupe selon le plan de coupe A-A illustré à la figure 1, au niveau de l'embase du radôme ;
[Fig. 5] La figure 5 illustre une vue en coupe du radôme selon le plan de coupe A-A illustré à la figure 1 selon une variante de réalisation, au niveau de l'embase ;
[Fig. 6] La figure 6 illustre une vue en coupe d'un radôme selon un deuxième mode de réalisation de l'invention ;
[Fig. 7] La figure 7 illustre une vue éclatée de la vue en coupe de la figure 6 ;
[Fig. 8] La figure 8 illustre une vue en coupe du radôme selon une variante de réalisation du deuxième mode de réalisation ;
[Fig. 9] La figure 9 illustre une vue en coupe du radôme illustré aux figures 6 à 8, au niveau de l'embase du radôme ;
[Fig. 10] La figure 10 illustre une vue en coupe du radôme selon une variante de réalisation du deuxième mode de réalisation ;
[Fig. 11] La figure 11 illustre une vue en coupe du radôme de la figure 10, au niveau de l'embase.

### Description détaillée de l'invention

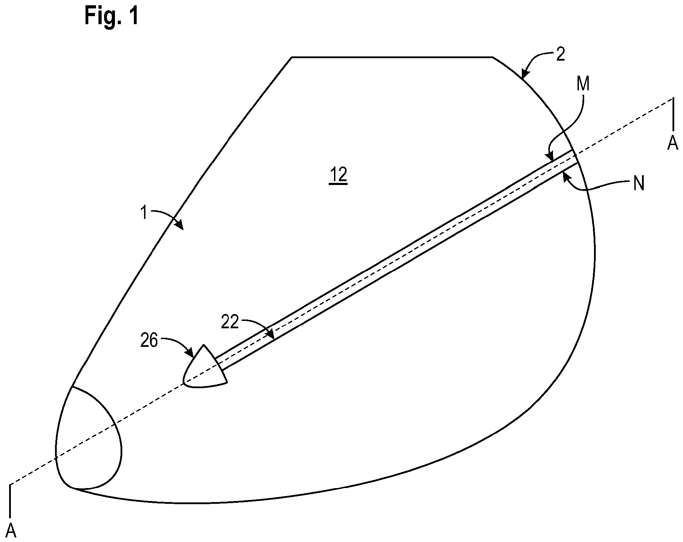

En référence à la figure 1, l'invention concerne un radôme 1 dit de nez (en anglais « nose radome ») d'aéronef destiné à protéger une antenne située en partie la plus avant de l'aéronef. Cependant, dans le cadre de l'invention, le radôme peut également être un radôme tactique placé en avant de l'aéronef sous celui-ci. Le radôme peut aussi être un radôme de type SATCOM (*Satellite Communication*) servant à protéger des antennes satellitaires de l'aéronef. Ce type de radôme est généralement placé sur une partie supérieure de l'aéronef. Toujours dans le cadre de l'invention le radôme peut également être placé sur la partie arrière de l'aéronef, notamment sur un carénage supérieur de l'aéronef, également sur un flanc de l'aéronef, etc.

Dans la suite de la description, il a été choisi de décrire l'invention plus précisément dans le cadre d'une application à un radôme de nez, sans que l'invention soit donc limitée à cette seule application.

Le radôme 1 comprend une embase 2 qui le sépare physiquement du reste de l'aéronef (non illustré). Il comprend une base 3 électriquement conductrice (non visible sur la figure 1), située au niveau de l'embase 2 qui permet de relier électriquement le radôme 1 à une masse de l'aéronef.

En outre, le radôme 1 comprend une structure composite 10 configurée pour lui conférer une protection parafoudre.

La structure composite 10 comprend une paroi extérieure 12 faite d'une matière électriquement isolante et une bande 22 électriquement conductrice, par exemple en aluminium ou en cuivre. Du fait de son positionnement extérieur, la paroi extérieure 12 est susceptible de recevoir l'électricité issue de la foudre lorsque l'aéronef est en vol. À cet égard, la bande 22 électriquement conductrice est agencée par rapport à ladite paroi extérieure 12 de sorte à conduire l'électricité générée par les impacts de foudre jusqu'à la base 3 conductrice. L'agencement de la bande 22 électriquement conductrice par rapport à la paroi extérieure 12 sera décrit plus en détail dans la suite en référence aux différents modes de réalisation.

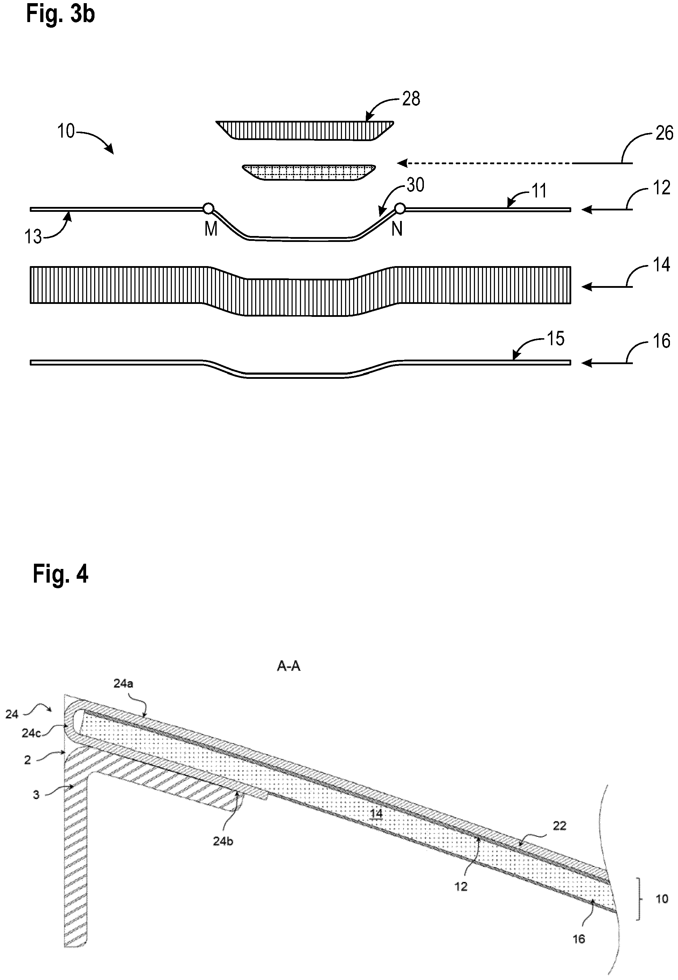

Selon un premier aspect de l'invention, une première extrémité 24 de la bande 22 électriquement conductrice est en contact avec la base 3 conductrice. Ainsi, comme la base 3 conductrice est reliée à la masse de l'aéronef, la bande 22 électriquement conductrice est elle aussi électriquement reliée à la masse de l'aéronef par l'intermédiaire de ladite base 3 conductrice. L'électricité reçue par la foudre peut ainsi être conduite jusqu'à la masse de l'aéronef ce qui permet de prévenir toute détérioration de la paroi extérieure 12, isolante par nature, par pulvérisation de la matière de ladite paroi extérieure 12. La structure composite 10 ainsi configurée permet de protéger le radôme 1 des impacts de foudre. Nous y reviendrons dans la description relative aux figures 4, 5, 9 et 10.

Selon un deuxième aspect de l'invention, la structure composite 10 est dépourvue de perforations ou de passages traversant la paroi extérieure 12 au niveau de la bande 22 électriquement conductrice. En d'autres termes, la paroi extérieure 12 de la structure composite ne peut pas comprendre, notamment, de perforations traversantes résultant d'un usinage ou d'une intervention humaine. Cela est rendu possible car la liaison électrique de la bande 22 électriquement conductrice avec la masse de l'aéronef est effectuée par le contact entre la première extrémité 24 et la base 3 conductrice. Plus généralement, la paroi extérieure 12 ne peut pas comprendre de passages traversants. On entend par « passage » un endroit où un fluide est susceptible de passer. Une perforation est donc un type particulier de passage. Autrement dit, un passage n'est pas nécessairement une perforation, le terme passage se référant plus généralement à tout endroit par lequel un fluide peut passer à travers la paroi extérieure 12.

Comme cela a été vu au préambule de cette description détaillée ce n'est classiquement pas le cas des structures composites de l'art antérieur, dans lesquelles des moyens de fixations et/ou de raccordement à la masse de la bande électriquement conductrice traversent toujours au moins la bande électriquement conductrice et la paroi extérieure. Ainsi, en cas d'impacts de foudre répétés sur la structure composite, celle-ci étant perforée au niveau des moyens de fixation et/ou de raccordement à la masse de la bande électriquement conductrice, il y a un risque accru que la taille de ces perforations augmente par pulvérisation de la matière à leur endroit et qu'à terme l'intégrité structurelle du radôme soit compromise et que du fluide puisse s'infiltrer à l'intérieur du radôme.

L'absence de perforations traversantes dans la paroi extérieure 12, i.e. de perforations traversant la paroi extérieure 12, au niveau de la bande 22 électriquement conductrice permet de prévenir une usure prématurée de la structure composite 10 et favorise une bonne tenue mécanique du radôme 1 même après plusieurs impacts de foudre. En effet, la paroi extérieure 12 forme une interface physique entre l'extérieur du radôme 1 et l'intérieur de la structure composite 10. Dans certains cas, comme cela sera vu dans la suite, elle peut former avec la bande 22 électriquement conductrice l'interface entre l'extérieur et l'intérieur du radôme.

Précisions que l'on entend par « au niveau de la bande 22 électriquement conductrice », le volume de la structure composite 10 situé autour du plan de coupe de la bande 22 électriquement conductrice, le plan de coupe de la bande 22 électriquement conductrice étant défini comme le plan normal à la paroi extérieure 12 passant par l'axe longitudinal de la bande 22 électriquement conductrice.

On comprend donc que le volume de la structure composite 10 situé autour de la bande 22 électriquement conductrice, incluant la bande 22 électriquement conductrice elle-même, est un volume dans lequel il ne doit pas exister de passage fluide ou électrique (foudroiements) vers l'intérieur de la structure composite pour éviter de dégrader sa tenue mécanique.

Le volume précité n'est donc pas limité aux seuls modes de réalisation présentés dans la présente description mais peut adopter des géométries variables selon toute configuration de la bande 22 électriquement conductrice par rapport à la paroi extérieure 12 qui, sans être illustrée ou exemplifiée dans la présente invention, serait telle que définie précédemment.

Par exemple, dans l'éventualité où c'est la bande 22 électriquement conductrice elle-même qui de par sa configuration est susceptible de créer un passage pour le fluide depuis l'extérieur vers l'intérieur du radôme, le volume de la structure composite 10 situé au niveau de la bande 22 électriquement conductrice correspond *a minima* au volume même de ladite bande.

En outre, en ce qui concerne la(es) « perforation(s) traversante(s) » ce qui importe dans le cadre de l'invention c'est qu'elle(s) ne traverse(nt) pas la paroi extérieure 12.

Une perforation traversant la paroi extérieure 12 peut consister en une succession de perforations qui du fait de leur positionnement proche ou en chaîne crée une communication entre l'extérieur du radôme et l'intérieur de la structure composite. Par exemple, deux perçages effectués dans la paroi extérieure 12 sans que chacun d'eux la traverse intégralement sont considérés comme traversant la paroi extérieure 12 si lesdits perçages ou passages sont agencés de manière à créer un chemin d'accès à un fluide, par exemple l'air.

Comme ceci est expliqué dans la suite, la paroi extérieure 12 ne comprend pas de perforations ou de passages vers l'intérieur de la structure composite 10. La paroi extérieure 12 est donc intégralement continue. Incidemment, comme ceci a été vu précédemment, tous les éléments du radôme, y compris la bande 22 électriquement conductrice, sont agencés de manière à ne jamais traverser eux-mêmes l'épaisseur de la paroi extérieure 12.

Selon un autre aspect de l'invention, le radôme 1 peut être protégé d'une usure prématurée sans compromettre les propriétés aérodynamiques de l'aéronef. À cet égard, la structure composite 10 définit au moins un logement 20 situé à l'intérieur ou à l'extérieur de la structure composite 10 et s'étend le long du radôme à partir de l'embase 2. Le logement 20 reçoit la bande 22 électriquement conductrice et selon le mode de réalisation, soit la bande 22 électriquement conductrice est au contact d'une surface interne 13 de la paroi extérieure 12 lorsque le logement 20 est à l'intérieur de la structure composite 10 soit elle affleure ladite paroi extérieure 12 lorsque le logement 20 est à l'extérieur de la structure composite 10. En étant ainsi positionnée, la bande 22 électriquement conductrice ne génère pas d'aspérités en surface de la paroi extérieure 12, aspérités qui sont susceptibles de se répliquer sur des couches supérieures (e.g. couche de revêtement antistatique, anti-érosion et de protection) et ainsi ne perturbe pas l'écoulement de l'air sur le radôme 1. Il en résulte que le positionnement de la bande 22 électriquement conductrice ne produit pas d'effet indésirable sur les propriétés aérodynamiques de l'aéronef.

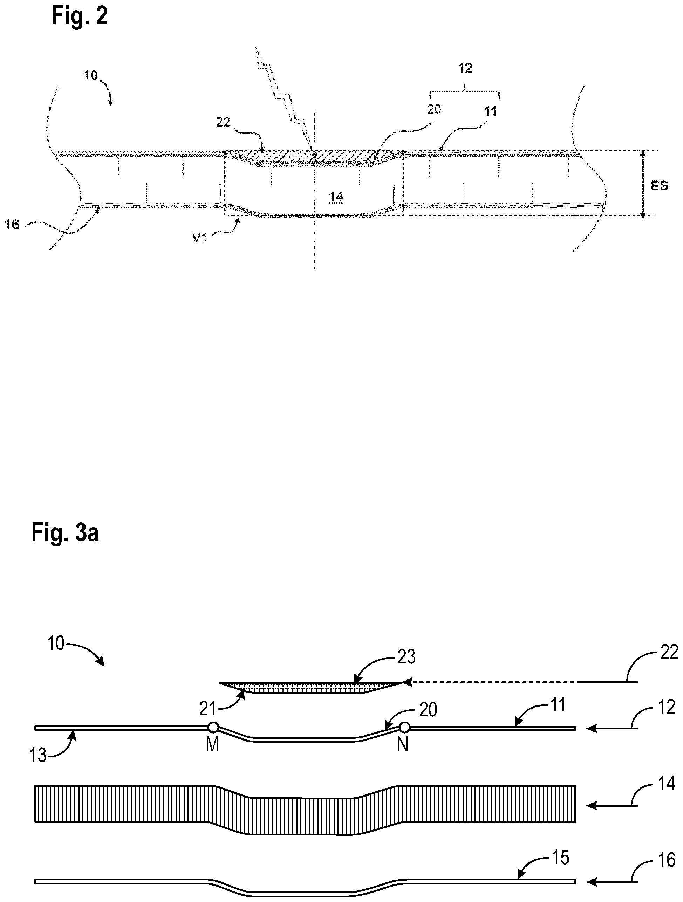

Les figures 2 à 5 illustrent un premier mode de réalisation de l'invention dans lequel la bande 22 électriquement conductrice affleure la paroi extérieure 12, ledit logement 20 étant à l'extérieur de la structure composite 10. On entend par le logement 20 est « à l'extérieur de la structure composite 10 » le fait que le logement 20, quoi qu'appartenant à la structure composite 10, soit positionné du côté de portions externes 11 de la paroi extérieure 12.

En référence à la figure 2, dans ce premier mode de réalisation le logement 20 est formé directement dans la paroi extérieure 12. Autrement dit, le logement 20 fait partie intégrante de la paroi extérieure 12. Le logement 20 se présente avantageusement sous la forme d'un profil creux formé dans la paroi extérieure 12. La forme en profil creux du logement 20 est non seulement ajustée aux contours de la bande 22 électriquement conductrice mais de plus la profondeur du profil creux et donc du logement 20 est adaptée pour que la bande 22 électriquement conductrice affleure la paroi extérieure 12. La forme du profil creux est « ajustée » en ce que le logement 20 épouse la forme de la bande 22 électriquement conductrice tout en étant serré autour de ladite bande 22 électriquement conductrice.

En effet, le profil creux est réalisé lors du moulage du radôme 1 en combinant de façon adéquate le principe constructif du radôme 1 avec les dimensions de la bande 22 électriquement conductrice. Cela signifie que dès l'étape de conception, les dimensions de la bande 22 électriquement conductrice constituent une contrainte à prendre en compte pour définir les dimensions du logement 20. À cet égard et du point de vue pratique, le moulage du radôme au niveau du logement 20 est opéré sur empreinte mâle en moule matrice. Ce procédé de formation du logement 20 permet d'éviter de modifier la structure du radôme 1 par ajout de zones densifiées. Il faut noter en outre, en relation avec ce mode de réalisation, que la bande 22 électriquement conductrice n'est pas fixée au logement 20 en utilisant des moyens de fixation traversant, sans quoi on formerait aussi un perçage dans la paroi extérieure 12, dans laquelle est formée le logement 20. De préférence, la bande 22 électriquement conductrice est collée dans le logement 20. Pour effectuer ce collage structurel, on pourra avoir recours à une colle de type 3M EC2216. En alternative, il est également possible d'effectuer une cocuisson au moyen d'un film ou d'un pré-imprégné auto adhésif pour permettre la fixation de la bande 22 électriquement conductrice dans le logement 20.

Comme cela peut être vu sur la figure 3a, la bande 22 électriquement conductrice comprend avantageusement une surface interne 21 épousant les contours du logement 20. Ainsi, la surface interne 21 présente un profil sensiblement identique à celui du profil creux que forme le logement 20. En outre, la bande 22 électriquement conductrice comprend une surface externe 23 affleurant les portions externes 11 de la paroi extérieure 12 autres qu'une portion où est formé le logement 20. La surface externe 23 suit précisément le profil des portions 11. Autrement dit, la surface externe 23 est sensiblement confondue avec une surface imaginaire passant par deux lignes M et N de la paroi extérieure 12 délimitant le logement 20 des portions 11 et suivant la forme des portions 11. Ces lignes M et N sont illustrées sur les figures 1 (en perspective) et 3a (en coupe). Les portions 11 et la surface externe 23 définissent donc la forme du contour, c'est-à-dire la surface « mouillée », du radôme 1. L'agencement de la bande 22 électriquement conductrice et du logement 20 par rapport à la paroi extérieure 12 permet ainsi de ne pas gêner l'écoulement de l'air sur le radôme 1. Précisons au regard de ce qui précède que la profondeur du logement 20 correspond donc à la distance séparant un fond du logement 20 et la surface imaginaire passant par les deux lignes M et N.

En outre, comme cela est illustré à la figure 3b, la bande 22 électriquement conductrice comprend une deuxième extrémité 26 et la structure composite 10 comprend un deuxième logement 30 formé dans la paroi extérieure 12 et recevant la deuxième extrémité 26 et un moyen 28 de fixation de la deuxième extrémité de la bande électriquement conductrice dans le deuxième logement 30.

Le deuxième logement 30 se trouve dans le prolongement du logement 20, c'est-à-dire qu'il jouxte le logement 20 et tout comme ce dernier, le deuxième logement 30 est dépourvu de perforations traversantes puisqu'il est formé dans la paroi extérieure 12.

Le moyen 28 de fixation est avantageusement fixé au-dessus de la bande 22 électriquement conductrice dans le deuxième logement 30. Cela permet de protéger la deuxième extrémité 26 de la bande électriquement conductrice d'un décollement dû au flux d'air. En effet, contrairement à la première extrémité 24 de la bande 22 électriquement conductrice, la deuxième extrémité 26 est orientée dans le sens opposé au flux d'air. En effet, lorsque l'aéronef est en vol, le flux d'air s'écoule depuis l'avant du radôme vers l'embase 2. De préférence, le moyen 28 de fixation est plus large que la bande 22 électriquement conductrice elle-même de sorte à améliorer la fixation de ladite bande 22. La figure 1 illustre d'ailleurs un exemple de réalisation dans lequel moyen 28 de fixation présente une forme en triangle recouvrant et débordant au-delà de la deuxième extrémité 26.

Le moyen 28 de fixation peut se présenter sous la forme d'un patch, c'est-à-dire un élément généralement plat et collant, mis en place lors de la phase de drapage en créant une réservation pour la deuxième extrémité 26. Plus précisément, le moyen 28 de fixation comprend plusieurs faces adhésives, l'une étant la face en contact avec la bande 22 électriquement conductrice et au moins deux autres faces en contact avec des bords latéraux du deuxième logement 30.

Le radôme 1 selon l'invention tient également compte des contraintes aérodynamiques au niveau de cette deuxième extrémité 26. À cet égard, le moyen 28 de fixation affleure avantageusement les portions 11 de la paroi extérieure 12 autres qu'une portion où est formé le deuxième logement 30. En d'autres termes, une face du moyen 28 de fixation exposée au flux d'air est sensiblement confondue avec une surface imaginaire passant par les deux lignes M et N de la paroi extérieure 12 et suivant la forme des portions 11, de manière similaire à la surface externe 23 de la bande électriquement conductrice au niveau du logement 20. Précisons, qu'il importe peu que la face du moyen 28 de fixation tournée vers l'extérieur du radôme soit adhésive ou pas puisque des couches de revêtement antistatique, anti-érosion et de protection viennent recouvrir l'intégralité de la structure composition 10 une fois celle-ci achevée. Ce qui importe c'est que la face du moyen 28 de fixation tournée vers l'extérieur du radôme affleure les portions 11 de sorte que lors du dépôt subséquent de ces couches de revêtement il n'y ait pas d'obstacle générant des perturbations de l'écoulement de l'air.

Tout comme le logement 20 avec la bande 22 électriquement conductrice, le deuxième logement 30 forme un profil creux ajusté aux contours de la deuxième extrémité 26 et du moyen 28 de fixation et ses dimensions sont adaptées pour que ledit moyen 28 de fixation affleure la paroi extérieure 12. À ce propos, comme cela est illustré sur la figure 3b, le deuxième logement 30 peut être plus profond que le logement 20. En effet, en plus de recevoir la deuxième extrémité 26 de la bande électriquement conductrice, le deuxième logement 30 reçoit le moyen 28 de fixation. Lors de la fabrication, l'empreinte mâle servant à former le radôme 1 est donc adaptée pour tenir compte de ce dimensionnement. Précisons que par simplification le deuxième logement 30 est illustré sur la figure 3b avec une forme similaire de celle du logement 20 mais que ledit deuxième logement 30 peut présenter une forme différente. Par exemple, cette forme pourrait être la forme triangulaire illustrée à la figure 1.

Comme cela a été mentionné précédemment, la structure composite 10 est dépourvue de perforations traversant la paroi extérieure 12 au niveau de la bande 22 électriquement conductrice. Dans ce mode de réalisation du radôme 1, la structure composite 10 est également dépourvue de toute pièce mécanique destinée à la fixation de la bande conductrice 22 sur la structure composite 10 dans un volume V1 de la structure composite 10 ayant comme base, au sens géométrique du terme, la surface externe 23 de la bande électriquement conductrice et ayant pour hauteur, au sens géométrique du terme, une épaisseur ES de la structure composite 10 (illustré sur la fig. 2). Précisons que la structure composite présente sensiblement la même épaisseur ES le long du radôme 1. La structure composite 10 présente ainsi, dans le volume V1, une homogénéité structurelle qui lui permet de mieux résister aux impacts de foudre répétés, ce qui a pour conséquence de permettre l'élimination du risque d'infiltration d'eau dans la structure composite 10 ainsi que l'élimination des concentrations de contraintes autour des zones de perçage sous les sollicitations mécaniques extérieures.

À ce propos, la structure composite 10 peut en outre comprendre une paroi intérieure 16 et une âme 14 située entre la paroi extérieure 12 et la paroi intérieure 16. En d'autres termes, en sélectionnant comme fenêtre d'observation le volume V1, la structure composite 10 comprend successivement la paroi intérieure 16, l'âme 14, la paroi extérieure 12 et la bande 22 électriquement conductrice, depuis l'intérieur du radôme jusqu'à l'extérieur du radôme. Toutefois, en sélectionnant une fenêtre d'observation en dehors du volume V1, la structure composite 10 comprend successivement la paroi intérieure 16, l'âme 14 et la paroi extérieure 12 depuis l'intérieur du radôme jusqu'à l'extérieur du radôme. Dans cette fenêtre d'observation, l'âme 14 est à la fois en contact avec une surface interne 13 de la paroi extérieure et avec une surface interne 15 de la paroi intérieure.

L'âme 14 se présente par exemple sous forme de nid d'abeilles, encore appelée « nida » dans la suite ou de mousse. Avantageusement, l'âme 14 est faite d'une unique matière le long du radôme 1. Autrement dit, dans ce mode de réalisation, l'âme 14 se présente sous forme de nida le long du radôme 1. Ainsi, en plus de son homogénéité structurelle tenant à l'absence de pièce dans le volume V1, l'homogénéité structurelle de la structure composite 10 tient également au fait qu'elle est faite de la même matière dans le volume V1 mais également en dehors de ce volume. Cela permet de ne pas avoir à densifier les zones de perçages d'où un gain en temps de fabrication et l'obtention d'un radôme ayant une masse limitée. Cela permet également de simplifier le procédé de fabrication de ladite structure composite 10.

En référence à la figure 4, la première extrémité 24 de la bande électriquement conductrice contourne avantageusement la structure composite 10 au niveau de l'embase 2. Autrement dit, la première extrémité 24 de la bande électriquement conductrice est configurée pour contourner la paroi extérieure 12, l'âme 14 et la paroi intérieure 16 pour venir en contact avec la base 3 conductrice. Le contournement de la structure composite 10 au niveau de l'embase 2 permet d'éviter d'avoir à percer le radôme 1 pour relier la bande 22 électriquement conductrice à la masse de l'aéronef. On évite ainsi les inconvénients précédemment cités des perforations traversantes du radôme au niveau de la bande 22 électriquement conductrice.

De préférence, la première extrémité 24 de la bande électriquement conductrice présente une forme de U. Cela dit, de manière générale toute forme permettant un contournement de la structure composite 10 pourrait convenir, la forme en U n'étant nullement limitative. La première extrémité 24 de la bande électriquement conductrice comprend une première branche 24a longitudinale s'étendant dans le logement 20. La première branche 24a longitudinale est tournée vers l'extérieur du radôme 1 et se situe à proximité de l'embase 2. La première extrémité 24 de la bande électriquement conductrice comprend une deuxième branche 24b longitudinale en contact avec la base 3 conductrice. Plus précisément, la deuxième branche 24b est au moins en partie en contact avec la base 3 conductrice. Autrement dit, il n'est pas nécessaire que la deuxième branche 24b longitudinale soit intégralement en contact avec la base 3 conductrice. La première extrémité 24 de la bande électriquement conductrice comprend en outre une branche 24c transversale reliant les première et deuxième branches 24a, 24b longitudinales en contournant l'embase 2. Dans l'exemple de réalisation illustré à la figure 4, la branche 24c transversale prend la forme d'un arc s'étendant latéralement externe par rapport à la structure composite 10, mais celle-ci pourrait prendre toute autre forme dès lors qu'elle relie les première et deuxième branches 24a, 24b longitudinales et contourne la structure composite 10 au niveau de l'embase 2. Cela étant dit, préférentiellement, la branche 24 transversales contourne la structure composite 10 de manière rapprochée, ce qui lui permet également d'améliorer le maintien de la bande 22 électriquement conductrice.

À ce propos, précisons que si le contournement est possible au niveau de l'embase 2 c'est parce que le radôme 1 est une pièce de l'aéronef qui est non seulement indépendante des autres pièces dudit aéronef mais également qui peut être fabriquée indépendamment des autres pièces. Ainsi, le contournement de la structure composite 10 par la bande 22 électriquement conductrice peut être réalisé au moment de la fabrication du radôme 1 sans difficulté technique excessive par le fabricant. De plus, la bande 22 électriquement conductrice présente une épaisseur - comprise entre quelques dixièmes de millimètres et quelques millimètres - qui est suffisamment faible pour ne pas empêcher le montage des pièces et ne pas générer de défaut d'étanchéité de la structure externe de l'aéronef. Concomitamment, la colle utilisée lors du collage structurel permet de colmater l'espace laissé libre et dans le cas d'une cocuisson, un joint en pâte sera utilisé. Le contournement de la structure composite 10 par la bande 22 électriquement conductrice est donc non seulement avantageux car il permet de s'affranchir des perforations traversantes qui à terme peuvent causer des problèmes de tenue mécanique de la structure composite 10, voire même des problèmes d'étanchéité mais aussi car il est techniquement aisé à mettre en œuvre dans un procédé de fabrication du radôme.

La base 3 est liée à la structure composite 10 par le biais de vis et d'inserts non traversant. Ces derniers traversent la deuxième branche 24b longitudinale, la paroi intérieure 16 et l'âme 14 sans traverser la première branche 24a longitudinale et la paroi extérieure 12. Seules la deuxième branche 24b longitudinale, la paroi intérieure 16 et l'âme 16 sont donc percées, la première branche 24a longitudinale et la paroi extérieure 12 restant intactes. La structure composite 10 ne comprend donc en aucun cas, en particulier au niveau de la bande électriquement conductrice, de perforation dans la paroi extérieure 12 mais uniquement à l'endroit précité. La structure composite 10 et la base 3 conductrice sont ainsi rigidement assemblées.

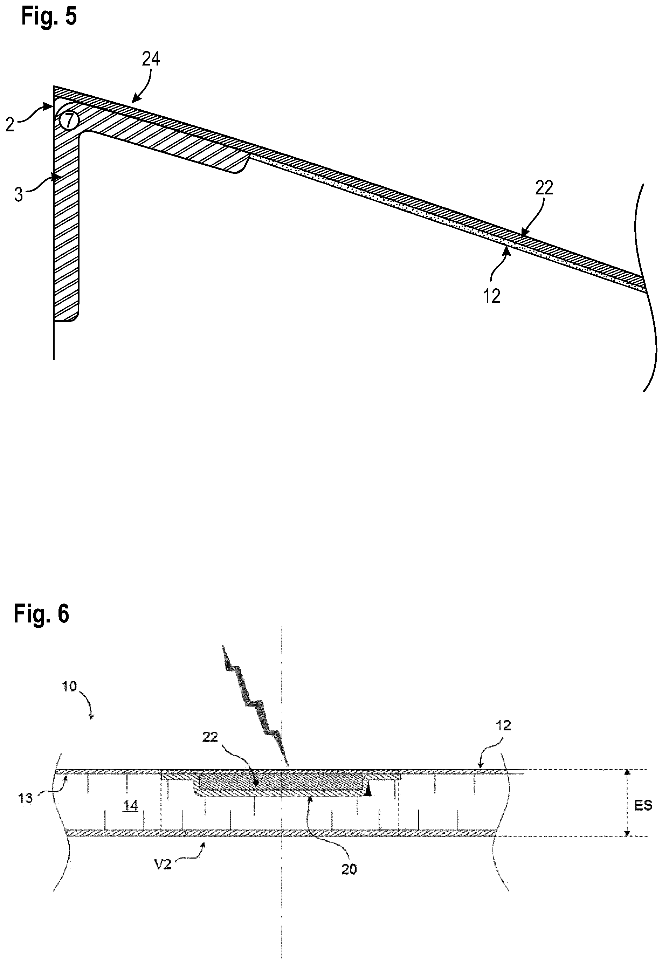

Selon une variante illustrée sur la figure 5, la structure composite 10 est avantageusement une structure monolithique. On entend par « structure monolithique » le fait que la structure composite 10 soit dépourvue d'âme 14. Autrement dit, la structure composite 10 comprend uniquement la paroi extérieure 12, le logement 20 et la bande 22 électriquement conductrice, la surface interne 13 de la paroi extérieure étant directement en vis-à-vis de l'intérieur du radôme. La structure monolithique présente plusieurs avantages. En effet, outre le fait qu'elle permet d'économiser de la matière, la structure monolithique est également plus simple à mettre en œuvre.

Ceci tient au fait que lorsque la structure composite 10 se présente sous forme de structure monolithique, la bande 22 électriquement conductrice peut être rectiligne entre la première extrémité 24 et la deuxième extrémité 26. En effet, la structure monolithique présente une épaisseur bien plus faible que la structure composite 10 avec âme 14 sous forme de nida, de sorte qu'elle peut être alignée avec la base 3 conductrice. Dès lors, il est tout à fait possible d'avoir recours à une bande 22 électriquement conductrice rectiligne entre la première extrémité 24 et la deuxième extrémité 26. Le procédé de fabrication du radôme 1 est encore plus simplifié. Dans ce cas, la structure composite 10 est solidarisée avec le radôme 1 par le biais d'une fixation par vis de la structure composite 10 sur la base 3 conductrice. Toutefois, il convient de préciser que cette fixation n'est pas réalisée au niveau de la bande 22 électriquement conductrice mais dans une portion de la base 3 conductrice qui n'est pas en vis-à-vis de la bande 22.

Les figures 6 à 11 illustrent un deuxième mode de réalisation de l'invention dans lequel la bande 22 électriquement conductrice est au contact de la surface interne 13, ledit logement 20 étant à l'intérieur de la structure composite 10. On entend par le logement 20 est « à l'intérieur de la structure composite 10 » le fait que le logement 20, quoi qu'appartenant à la structure composite 10, soit positionné du côté de la surface interne 13 de la paroi extérieure 12.

En référence à la figure 6, dans le second mode de réalisation de l'invention le logement 20 est fermé par la paroi extérieure 12, ladite paroi extérieure 12 recouvrant intégralement le logement 20 et la bande 22 électriquement conductrice. En effet, le logement 20 se présente sous la forme d'une poche ouverte ou d'un réservoir qui serait ouvert sur l'extérieur au niveau d'une face s'il n'était pas fermé par la paroi extérieure 12 au niveau de ladite face. Incidemment, comme le logement 20 accueille la bande 22 électriquement conductrice, cette dernière est donc encapsulée entre le logement 20 et la paroi extérieure 12. L'agencement de la bande 22 électriquement conductrice et du logement 20 par rapport à la paroi extérieure 12 permet ainsi de ne pas créer d'aspérités sur la paroi extérieure 12.

Avantageusement, la paroi extérieure 12 présente une épaisseur comprise entre 0,15mm et 1,00mm. La paroi extérieure 12 présente ainsi une épaisseur appropriée pour conduire l'énergie de la foudre jusqu'à la bande 22 électriquement conductrice, et éventuellement être perforée en cas d'impact de foudre sur ladite paroi extérieure 12, tout en limitant la quantité de matière pulvérisée. En effet, l'énergie à laquelle la matière est ionisée lors d'un impact de foudre peut être suffisante pour qu'une grande quantité de matière dont est faite la paroi extérieure 12 soit pulvérisée. Ce phénomène doit être limité car il est risqué. Ainsi, la gamme d'épaisseur de la paroi extérieure 12 représente un compromis entre nécessité de conduire l'énergie de la foudre jusqu'à la bande 22 électriquement conductrice et limitation de la quantité de matière pulvérisée. À ce propos, le fait que la bande 22 électriquement conductrice soit en contact avec la surface interne 13 de la paroi extérieure permet de conserver une épaisseur minimale.

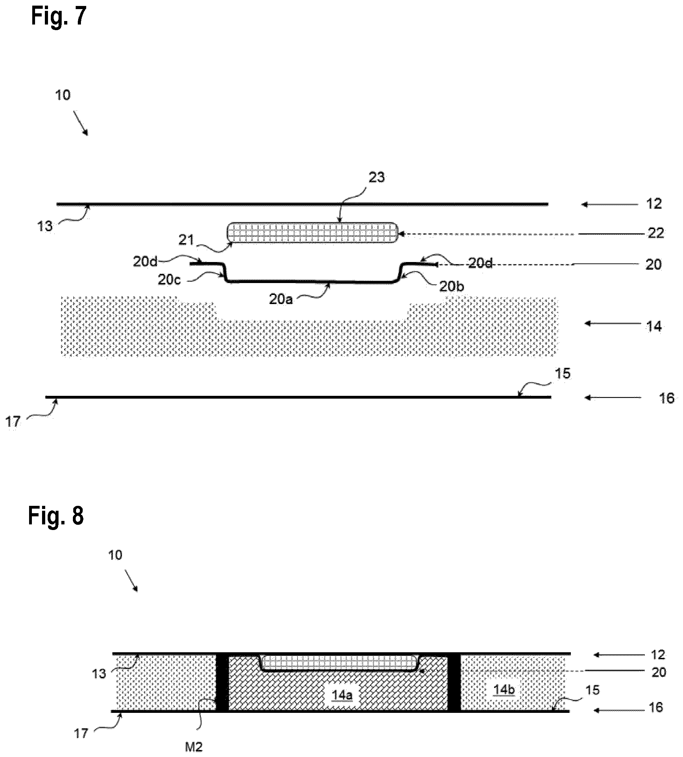

En référence à la figure 7, le logement 20 présente une forme de Ω (« omega ») comprenant une portion longitudinale en forme de U depuis laquelle s'étendent deux pattes 20d d'accroche.

La portion longitudinale en forme de U s'étend entre l'avant du radôme, au niveau d'une deuxième extrémité 26 de la bande électriquement conductrice, et l'embase 2. Dans ce mode de réalisation, la deuxième extrémité 26 s'étend dans le logement 20 et sans être retenue par un moyen de fixation. En effet, comme la bande 22 électriquement conductrice est recouverte par la paroi extérieure 12, aucun moyen de fixation de la deuxième extrémité 26 n'est nécessaire puisqu'elle n'est pas susceptible d'être décollée par le flux d'air.

La portion longitudinale en forme de U comprend une branche transversale 20a et deux branches longitudinales 20b, 20c qui s'étendent depuis la branche transversale 20a. Comme la bande 22 électriquement conductrice est disposée dans la portion longitudinale en forme U, les dimensions de cette dernière sont adaptées aux dimensions de la bande 22 électriquement conductrice. Incidemment, comme la bande 22 électriquement conductrice est au contact avec la surface interne 13 de la paroi extérieure, la longueur des branches longitudinales 20b, 20c est sensiblement égale à l'épaisseur de la bande 22 électriquement conductrice.

Les deux pattes 20d d'accroche s'étendent quant à elles depuis la portion longitudinale en forme de U, ce qui confère au logement une forme générale de Ω. Plus précisément, chaque patte 20d d'accroche s'étend depuis l'autre extrémité des branches 20b, 20c longitudinales respectivement qui n'est pas reliée à la branche transversale 20a.

Pour former la « poche » un additif à l'outillage de moulage est ajouté lors de cette phase du procédé de fabrication du radôme. Cet additif est ensuite retiré pour permettre l'insertion de la bande métallique définitive. De préférence, ladite bande 22 électriquement conductrice est retenue dans le logement 20 que constitue la poche par un procédé de collage ou de rivetage ou de vissage. Il faut noter qu'au niveau de cette zone, il importe peu que la structure composite 10 soit perforée puisque cette zone n'est jamais en contact direct avec des impacts de foudre.

Dans l'exemple de réalisation illustré à la figure 7, la structure composite 10 peut en outre comprendre une paroi intérieure 16 et une âme 14 située entre le logement 20 - et les portions de la surface interne 13 en deçà du logement 20 - et la paroi intérieure 16. Soit un volume V2 de la structure composite 10 ayant comme base, au sens géométrique du terme, une projection orthogonale du logement 20 sur la surface interne 13 et comme hauteur, au sens géométrique du terme, une épaisseur ES de la structure composite. En sélectionnant comme fenêtre d'observation le volume V2, la structure composite 10 comprend successivement, dans cet exemple de réalisation, la paroi intérieure 16, l'âme 14, le logement 20, la bande 22 électriquement conductrice et la paroi extérieure 12, depuis l'intérieur du radôme jusqu'à l'extérieur du radôme. Evidemment, dans la zone du volume V2 où se trouvent les pattes 20d d'accroche, la structure composite 10 comprend successivement la paroi intérieure 16, l'âme 14, les pattes 20d d'accroche du logement 20 et la paroi extérieure 12. Toutefois, en sélectionnant une fenêtre d'observation en dehors du volume V2, la structure composite 10 comprend successivement la paroi intérieure 16, l'âme 14 et la paroi extérieure 12. Dans cette dernière fenêtre d'observation, l'âme 14 est donc à la fois en contact avec la surface interne 13 de la paroi extérieure et avec une surface interne 15 de la paroi intérieure.

Dans l'exemple de réalisation illustré à la figure 8, la structure de l'âme 14 dans un volume V3 ayant comme base le logement 20 et ayant pour hauteur la distance séparant le logement 20 de la paroi intérieure 16 diffère de la structure de l'âme 14 dans le reste de la structure composite. Il est à noter que le volume V3 diffère du volume V2 en ce qu'il ne comprend pas le volume compris entre le logement 20 et la paroi extérieure 12. Dans ce mode de réalisation, le volume V3 est comprend une matière 14a consistant en une mousse ou une zone densifiée, tandis que le reste 14b de l'âme 14 se présente sous forme de nid d'abeilles ou nida 14b. En pratique, le volume V2 constitue une « réserve » permettant de différencier au besoin, selon les exigences mécaniques, la matière 14a du reste 14b de l'âme. Cette réserve est réalisée par un usinage ou un thermoformage. Afin de joindre la mousse 14a au nida 14b, la structure composite 10 peut comprendre en outre des bandes 25 d'adhésion situées aux interfaces entre la matière 14a, i.e. la mousse 14a. Une première interface se trouvant à proximité immédiate d'une des pattes 20d, l'autre à proximité de l'autre des pattes 20d d'accroche. De préférence, les bandes 25 d'adhésion consistent en des zones d'intumescent. Ces dernières sont réalisées en exposant la mousse 14a à de la chaleur ce qui lui permet de gonfler et de mieux adhérer au nida.

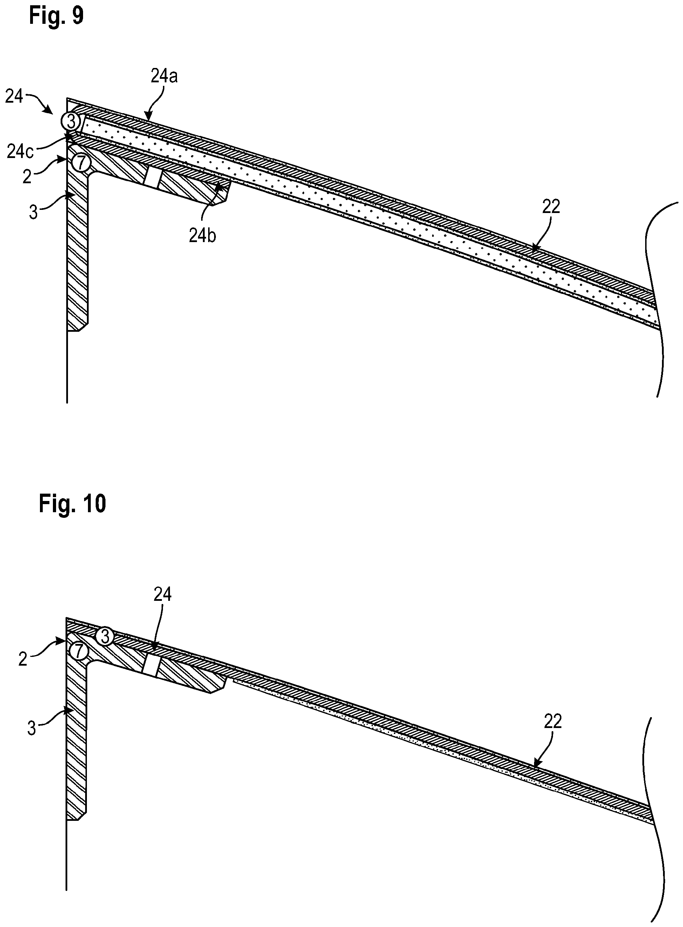

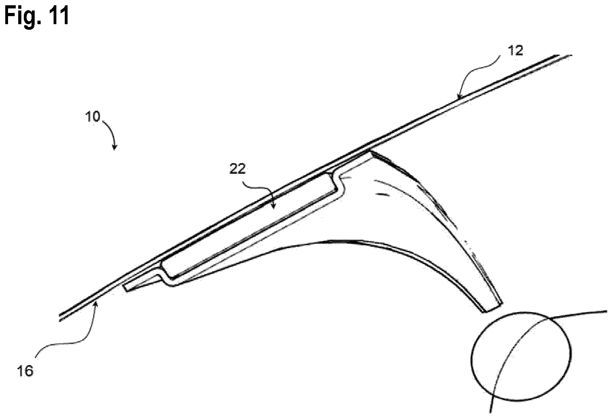

Si dans les exemples de réalisations des figures 7 et 8, la structure composite 10 comprend une âme 14 sous forme de nida, ce n'est pas toujours le cas, comme cela sera vu dans la description relative aux figures 10 et 11.

En référence à la figure 9, la première extrémité 24 de la bande électriquement conductrice contourne avantageusement la structure composite 10 au niveau de l'embase 2. Ce contournement est similaire à celui vu en référence à la figure 4 mais en diffère uniquement par la nature des couches contournées. En effet, comme cela a été vu précédemment, la bande 22 électriquement conductrice n'est pas agencée de la même façon par rapport à la paroi extérieure 12. Ainsi, dans ce mode de réalisation, la première extrémité 24 de la bande électriquement conductrice contourne le logement 20, l'âme 14 et la paroi intérieure 16 pour venir en contact avec la base 3 conductrice. Pour rappel, le contournement de la structure composite 10 au niveau de l'embase 2 permet d'éviter d'avoir à percer le radôme 1 pour relier la bande 22 électriquement conductrice à la masse de l'aéronef. On évite ainsi les inconvénients des perforations traversantes du radôme au niveau de la bande 22 électriquement conductrice. Comme précédemment, la base 3 est liée à la structure composite 10 par le biais de vis et d'inserts non traversant. Ces derniers traversent la deuxième branche 24b longitudinale, la paroi intérieure 16 et l'âme 14 sans traverser la première branche 24a longitudinale et la paroi extérieure 12. Seules la deuxième branche 24b longitudinale, la paroi intérieure 16 et l'âme 16 sont donc percées, la première branche 24a longitudinale et la paroi extérieure 12 restant intactes.

Comme dans le premier mode de réalisation, la première extrémité 24 de la bande électriquement conductrice présente donc une forme de U. La description relative à la forme en U et son agencement dans la structure composite s'applique donc au présent mode de réalisation sauf en ce qui concerne la nature des couches contournées.

Selon la variante illustrée sur les figures 10 et 11, la structure composite 10 est avantageusement une structure monolithique répondant à la même définition que celle précédemment vue en relation avec le premier mode de réalisation. Autrement dit, la structure composite 10 comprend uniquement la paroi extérieure 12, le logement 20 et la bande 22 électriquement conductrice, la surface interne 13 de la paroi extérieure 12 et la face du logement 20 opposée à celle tournée vers la paroi extérieure 12 étant directement en vis-à-vis de l'intérieur du radôme. Les avantages d'une telle structure monolithique sont les mêmes que ceux précédemment vus en relation avec le premier mode de réalisation. En particulier, dans cette variante de réalisation la bande 22 électriquement conductrice est notamment rectiligne entre la première extrémité 24 et la deuxième extrémité 26.

L'invention concerne aussi un aéronef comprenant une antenne apte à émettre et recevoir un signal radiofréquence et un radôme 1 tel que précédemment décrit. Le radôme 1 permet de protéger l'antenne des impacts de foudre tout en conservant une bonne tenue mécanique, même après des impacts de foudre répétés.

L'aéronef peut être un aéronef à voilure fixe (e.g. avion) ou à voilure tournante (e.g. hélicoptère).

## Revendications

1. Radôme (1) d'aéronef comprenant :
- une structure composite (10) définissant au moins un logement (20) situé à l'intérieur ou à l'extérieur de la structure composite (10) et s'étendant le long du radôme à partir d'une embase (2) dudit radôme, ledit au moins un logement (20) recevant une bande (22) électriquement conductrice et ladite bande (22) conductrice étant soit au contact d'une surface interne (13) d'une paroi extérieure (12) de la structure composite (10) lorsque ledit au moins un logement (20) est à l'intérieur de la structure composite (10), soit affleurant la paroi extérieure (12) de la structure composite (10) lorsque ledit au moins un logement (20) est à l'extérieur de la structure composite (10),
- une base (3) conductrice située au niveau de ladite embase (2) de radôme et apte à être reliée à une masse de l'aéronef, **caractérisé en ce que** ladite structure composite (10) est dépourvue de perforations ou de passages traversant la paroi extérieure (12) au niveau de la bande (22) électriquement conductrice et **en ce qu'** une première extrémité (24) de ladite bande (22) électriquement conductrice est en contact avec la base (3) conductrice.

2. Radôme (1) selon la revendication 1, dans lequel lorsque ledit au moins un logement (20) est à l'extérieur de la structure composite (10) et que la bande (22) électriquement conductrice affleure la paroi extérieure (12), une surface interne (21) de la bande électriquement conductrice épouse les contours du logement (20).

3. Radôme (1) selon l'une quelconque des revendications 1 ou 2, dans lequel la structure composite (10) comprend en outre une paroi intérieure (16) et une âme (14), par exemple sous forme de nid d'abeille, située entre la paroi extérieure (12) et la paroi intérieure (16), l'âme (14) étant faite d'une unique matière le long du radôme (1).

4. Radôme (1) selon l'une quelconque des revendications précédentes, lorsque ledit au moins un logement (20) est à l'extérieur de la structure composite (10) et que la bande (22) électriquement conductrice affleure la paroi extérieure (12), ledit radôme (1) comprenant en outre au moins un autre logement (30) formé dans la paroi extérieure (12), ledit au moins un autre logement (30) étant situé dans le prolongement du logement (20) et recevant une deuxième extrémité (26) de la bande (22) électriquement conductrice ainsi qu'un moyen (28) de fixation de ladite deuxième extrémité (26) de la bande électriquement conductrice sur la paroi extérieure (12), le moyen (28) de fixation affleurant des portions (11) de la paroi extérieure (12) autres qu'une portion où est formé le deuxième logement (30).

5. Radôme (1) selon la revendication 4, dans lequel le moyen (28) de fixation se présente sous la forme d'un patch fixant la deuxième extrémité (26) de la bande électriquement conductrice dans ledit au moins un autre logement (30).

6. Radôme (1) selon la revendication 1, dans lequel lorsque ledit au moins un logement (20) est à l'intérieur de la structure composite (10) et que la bande (22) électriquement conductrice est au contact de la surface interne (13) de la paroi extérieure (12), le logement (20) comprend une portion longitudinale en forme de U comprenant deux branches longitudinales (20b, 20c) et une branche transversale (20a), ledit logement (20) comprenant deux pattes (20d) d'accroche à la surface interne (13) de la paroi extérieure, lesdites pattes (20d) d'accroche s'étendant depuis les branches longitudinales (20b, 20c).

7. Radôme (1) selon la revendication 6, dans lequel la structure composite (10) comprend en outre une paroi intérieure (16) et une âme (14), par exemple sous forme de nid d'abeille, située entre la paroi extérieure (12) et la paroi intérieure (16), le logement (20) s'étendant dans l'épaisseur de l'âme (14).

8. Radôme (1) selon la revendication 7, dans lequel l'âme (14) comprend, dans un volume (V3) ayant comme base le logement (20) et ayant pour hauteur la distance séparant le logement (20) de la paroi intérieure (16), une matière différente (14a) d'une matière (14b) du reste de l'âme.

9. Radôme (1) selon la revendication 8, comprenant des bandes (25) d'adhésion situées aux interfaces entre la matière (14a) et le reste (14b) de l'âme.

10. Radôme (1) selon l'une quelconque des revendications 6 à 9, dans lequel la paroi extérieure (12) présente une épaisseur comprise entre 0,15mm et 1,00mm.

11. Radôme (1) selon l'une quelconque des revendications précédentes, dans lequel la première extrémité (24) de la bande (22) électriquement conductrice contourne la structure composite (10) au niveau de l'embase (2).

12. Radôme (1) selon la revendication 11, dans lequel ladite première extrémité (24) de la bande électriquement conductrice présente une forme de U, ladite première extrémité (24) de la bande électriquement conductrice comprenant une première branche (24a) longitudinale s'étendant dans le logement (20), une deuxième branche (24b) longitudinale étant en contact avec la base (3) et une branche (24c) transversale reliant les première et deuxième branches (24a, 24b) longitudinales en contournant la structure composite (10) au niveau de l'embase.

13. Radôme (1) selon la revendication 1, lorsque ledit au moins un logement (20) est à l'extérieur de la structure composite (10) et que la bande (22) électriquement conductrice affleure la paroi extérieure (12), dans lequel la structure composite (10) comprend uniquement la paroi extérieure (12), le logement (20) et la bande (22) électriquement conductrice, la surface interne (13) de la paroi extérieure (12) étant directement en vis-à-vis de l'intérieur du radôme.

14. Radôme (1) selon la revendication 1, lorsque ledit au moins un logement (20) est à l'intérieur de la structure composite (10) et que la bande (22) électriquement conductrice est au contact de la surface interne (13) de la paroi extérieure (12), dans lequel la structure composite (10) comprend uniquement la paroi extérieure (12), le logement (20) et la bande (22) électriquement conductrice, la surface interne (13) de la paroi extérieure (12) et la face du logement (20) opposée à la face tournée vers la paroi extérieure (12) étant directement en vis-à-vis de l'intérieur du radôme.

15. Radôme (1) selon la revendication 13, dans lequel la bande (22) électriquement conductrice est rectiligne entre la première extrémité (24) et la deuxième extrémité (26).

16. Aéronef comprenant :
- une antenne apte à émettre et recevoir un signal radiofréquence,
- un radôme (1) selon l'une quelconque des revendications précédentes.

## Patentansprüche

1. Radom (1) für ein Luftfahrzeug, umfassend:
- eine Verbundstruktur (10), die mindestens eine Aufnahme (20) definiert, die sich innerhalb oder außerhalb der Verbundstruktur (10) befindet und sich ausgehend von einem Boden (2) des Radoms entlang des Radoms erstreckt, wobei die mindestens eine Aufnahme (20) einen elektrisch leitfähigen Streifen (22) aufnimmt und der leitfähige Streifen (22) entweder mit einer Innenfläche (13) einer Außenwand (12) der Verbundstruktur (10) in Kontakt steht, wenn sich die mindestens eine Aufnahme (20) innerhalb der Verbundstruktur (10) befindet, oder mit der Außenwand (12) der Verbundstruktur (10) flächenbündig ist, wenn sich die mindestens eine Aufnahme (20) außerhalb der Verbundstruktur (10) befindet,
- eine leitfähige Basis (3), die sich im Bereich des Bodens (2) des Radoms befindet und mit einer Masse des Luftfahrzeugs verbunden werden kann,
**dadurch gekennzeichnet, dass** die Verbundstruktur (10) keine Perforationen oder Durchgänge aufweist, die im Bereich des elektrisch leitfähigen Streifens (22) durch die Außenwand (12) hindurchgehen, und dadurch, dass ein erstes Ende (24) des elektrisch leitfähigen Streifens (22) mit der leitfähigen Basis (3) in Kontakt steht.

2. Radom (1) nach Anspruch 1, wobei, wenn sich die mindestens eine Aufnahme (20) außerhalb der Verbundstruktur (10) befindet und der elektrisch leitfähige Streifen (22) mit der Außenwand (12) flächenbündig ist, eine Innenfläche (21) des elektrisch leitfähigen Streifens sich den Konturen der Aufnahme (20) anschmiegt.

3. Radom (1) nach einem der Ansprüche 1 oder 2, wobei die Verbundstruktur (10) weiter eine Innenwand (16) und einen Kern (14), zum Beispiel in Wabenform, umfasst, der sich zwischen der Außenwand (12) und der Innenwand (16) befindet, wobei der Kern (14) entlang des Radoms (1) aus einem einzigen Material besteht.

4. Radom (1) nach einem der vorstehenden Ansprüche, wobei das Radom (1), wenn sich die mindestens eine Aufnahme (20) außerhalb der Verbundstruktur (10) befindet und der elektrisch leitfähige Streifen (22) mit der Außenwand (12) flächenbündig ist, weiter mindestens eine weitere Aufnahme (30) umfasst, die in der Außenwand (12) gebildet ist, wobei sich die mindestens eine weitere Aufnahme (30) in der Verlängerung der Aufnahme (20) befindet und ein zweites Ende (26) des elektrisch leitfähigen Streifens (22) sowie ein Mittel (28) zum Befestigen des zweiten Endes (26) des elektrisch leitfähigen Streifens an der Außenwand (12) aufnimmt, wobei das Befestigungsmittel (28) mit anderen Abschnitten (11) der Außenwand (12) als einem Abschnitt, an dem die zweite Aufnahme (30) gebildet ist, flächenbündig ist.

5. Radom (1) nach Anspruch 4, wobei das Befestigungsmittel (28) die Form eines Patches aufweist, der das zweite Ende (26) des elektrisch leitfähigen Streifens in der mindestens einen weiteren Aufnahme (30) befestigt.

6. Radom (1) nach Anspruch 1, wobei die Aufnahme (20), wenn sich die mindestens eine Aufnahme (20) innerhalb der Verbundstruktur (10) befindet und der elektrisch leitfähige Streifen (22) mit der Innenfläche (13) der Außenwand (12) in Kontakt steht, einen U-förmigen Längsabschnitt umfasst, der zwei Längsschenkel (20b, 20c) und einen Querschenkel (20a) umfasst, wobei die Aufnahme (20) zwei Laschen (20d) zum Einhaken an der Innenfläche (13) der Außenwand umfasst, wobei sich die Einhaklaschen (20d) von den Längsschenkeln (20b, 20c) aus erstrecken.

7. Radom (1) nach Anspruch 6, wobei die Verbundstruktur (10) weiter eine Innenwand (16) und einen Kern (14), zum Beispiel in Wabenform, umfasst, der sich zwischen der Außenwand (12) und der Innenwand (16) befindet, wobei sich die Aufnahme (20) in die Dicke des Kerns (14) erstreckt.

8. Radom (1) nach Anspruch 7, wobei der Kern (14) in einem Volumen (V3), das als Basis die Aufnahme (20) aufweist und als Höhe den Abstand aufweist, der die Aufnahme (20) von der Innenwand (16) trennt, ein Material (14a) umfasst, das sich von einem Material (14b) des Rests des Kerns unterscheidet.

9. Radom (1) nach Anspruch 8, das Klebestreifen (25) umfasst, die sich an den Grenzflächen zwischen dem Material (14a) und dem Rest (14b) des Kerns befinden.

10. Radom (1) nach einem der Ansprüche 6 bis 9, wobei die Außenwand (12) eine Dicke im Bereich zwischen 0,15 mm und 1,00 mm aufweist.

11. Radom (1) nach einem der vorstehenden Ansprüche, wobei das erste Ende (24) des elektrisch leitfähigen Streifens (22) die Verbundstruktur (10) im Bereich des Bodens (2) umgibt.

12. Radom (1) nach Anspruch 11, wobei das erste Ende (24) des elektrisch leitfähigen Streifens eine U-Form aufweist, wobei das erste Ende (24) des elektrisch leitfähigen Streifens einen ersten Längsschenkel (24a), der sich in die Aufnahme (20) erstreckt, einen zweiten Längsschenkel (24b), der mit der Basis (3) in Kontakt steht, und einen Querschenkel (24c) umfasst, der den ersten und den zweiten Längsschenkel (24a, 24b) verbindet, indem er die Verbundstruktur (10) im Bereich des Bodens umgibt.

13. Radom (1) nach Anspruch 1, wobei die Verbundstruktur (10), wenn sich die mindestens eine Aufnahme (20) außerhalb der Verbundstruktur (10) befindet und der elektrisch leitfähige Streifen (22) mit der Außenwand (12) flächenbündig ist, nur die Außenwand (12), die Aufnahme (20) und den elektrisch leitfähigen Streifen (22) umfasst, wobei die Innenfläche (13) der Außenwand (12) direkt dem Innenraum des Radoms zugewandt ist.

14. Radom (1) nach Anspruch 1, wobei die Verbundstruktur (10), wenn sich die mindestens eine Aufnahme (20) innerhalb der Verbundstruktur (10) befindet und der elektrisch leitfähige Streifen (22) mit der Innenfläche (13) der Außenwand (12) in Kontakt steht, nur die Außenwand (12), die Aufnahme (20) und den elektrisch leitfähigen Streifen (22) umfasst, wobei die Innenfläche (13) der Außenwand (12) und die Seite der Aufnahme (20), die der der Außenwand (12) zugedrehten Seite gegenüberliegt, direkt dem Innenraum des Radoms zugewandt sind.

15. Radom (1) nach Anspruch 13, wobei der elektrisch leitfähige Streifen (22) zwischen dem ersten Ende (24) und dem zweiten Ende (26) geradlinig ist.

16. Luftfahrzeug, umfassend:
- eine Antenne, die ein Hochfrequenzsignal senden und empfangen kann,
- ein Radom (1) nach einem der vorstehenden Ansprüche.

## Claims

1. An aircraft radome (1) comprising:
- a composite structure (10) defining at least one housing (20) located inside or outside the composite structure (10) and extending along the radome from a base (2) of said radome, said at least one housing (20) receiving an electrically conductive strip (22) and said conductive strip (22) being either in contact with an inner surface (13) of an external wall (12) of the composite structure (10) when said at least one housing (20) is inside the composite structure (10), or flush with the external wall (12) of the composite structure (10) when said at least one housing (20) is outside the composite structure (10),
- a conductive base (3) located at the level of said radome base (2) and connected to a ground of the aircraft,
**characterized in that** said composite structure (10) being devoid of any perforations or passages through the external wall (12) at the electrically conductive strip (22) and **in that** a first end (24) of said electrically conductive strip (22) being in contact with the conductive base (3).

2. The radome (1) of claim 1, wherein when said at least one housing (20) is outside the composite structure (10) and the electrically conductive strip (22) is flush with the external wall (12), an inner surface (21) of the electrically conductive strip conforms to the contours of the housing (20).

3. The radome (1) according to any one of claims 1 or 2, wherein the composite structure (10) further comprises an inner wall (16) and a core (14), for example in the form of a honeycomb, located between the external wall (12) and the inner wall (16), the core (14) being made of a single material along the radome (1).

4. The radome (1) according to any one of the preceding claims, when said at least one housing (20) is outside the composite structure (10) and the electrically conductive strip (22) is flush with the external wall (12), said radome (1) further comprising at least one other housing (30) formed in the external wall (12), said at least one further housing (30) being located in the extension of the housing (20) and receiving a second end (26) of the electrically conductive strip (22) and means (28) for attaching said second end (26) of the electrically conductive strip to the external wall (12), the attachment means (28) being flush with portions (11) of the external wall (12) other than a portion where the second housing (30) is formed.

5. The radome (1) according to claim 4, wherein the attachment means (28) is in the form of a patch attaching the second end (26) of the electrically conductive strip in said at least one other housing (30).

6. The radome (1) according to claim 1, wherein when said at least one housing (20) is inside the composite structure (10) and the electrically conductive strip (22) is in contact with the inner surface (13) of the external wall (12) of the composite structure (10), the housing (20) comprises a U-shaped longitudinal portion comprising two longitudinal legs (20b, 20c) and a transverse leg (20a), said housing (20) comprising two hooking tabs (20d) at the inner surface (13) of the external wall, said hooking tabs (20d) extending from the longitudinal legs (20b, 20c).

7. The radome (1) according to claim 6, wherein the composite structure (10) further comprises an inner wall (16) and a core (14), for example in the form of a honeycomb, located between the external wall (12) and the inner wall (16), the housing (20) extending through the thickness of the core (14).

8. The radome (1) according to claim 7, wherein the core (14) comprises, in a volume (V3) having as a base the housing (20) and having as a height the distance between the housing (20) and the inner wall (16), a different material (14a) from a material (14b) of the rest of the core.

9. The radome (1) according to claim 8, comprising adhesion strips (25) located at the interfaces between the material (14a) and the rest (14b) of the core.

10. The radome (1) according to one any one of claims 6 to 9, wherein the external wall (12) has a thickness of between 0.15mm and 1.00mm.

11. The radome (1) according to any one of the preceding claims, wherein the first end (24) of the electrically conductive strip (22) bypasses the composite structure (10) at the base (2).

12. The radome (1) according to claim 11, wherein said first end (24) of the electrically conductive strip is U-shaped, said first end (24) of the electrically conductive strip comprising a first longitudinal leg (24a) extending into the housing (20), a second longitudinal leg (24b) contacting the base (3), and a transverse leg (24c) connecting the first and second longitudinal legs (24a, 24b) bypassing the composite structure (10) at the base.

13. The radome (1) according to claim 1, wherein when said at least one housing (20) is outside the composite structure (10) and the electrically conductive strip (22) is flush with the external wall (12), wherein the composite structure (10) comprises only the external wall (12), the housing (20) and the electrically conductive strip (22), with the inner surface (13) of the external wall (12) directly facing the interior of the radome.

14. The radome (1) according to claim 1, when said at least one housing (20) is inside the composite structure (10) and the electrically conductive strip (22) is in contact with the inner surface (13) of the external wall (12), wherein the composite structure (10) comprises only the external wall (12), the housing (20) and the electrically conductive strip (22), with the inner surface (13) of the external wall (12) and the side of the housing (20) opposite the side facing the external wall (12) directly facing the interior of the radome.

15. The radome (1) according claim 13, wherein the electrically conductive strip (22) is straight between the first end (24) and the second end (26).

16. An aircraft comprising:
- an antenna suitable for transmitting and receiving a radio frequency signal,
- a radome (1) according to any of the preceding claims.
